# EUROPÄISCHE PATENTSCHRIFT

(11) **EP 3 517 453 B1**
(45) Veröffentlichungstag und Bekanntmachung des Hinweises auf die Patenterteilung: **13.10.2021**
(21) Anmeldenummer: 19163881.6
(22) Anmeldetag: 08.11.2012
(51) Int. Cl.: B65D 1/24, B29C 45/14, B29C 45/00

(54) **VERFAHREN ZUM HERSTELLEN VON GETRÄNKEKISTEN AUS KUNSTSTOFF**
METHOD FOR MANUFACTURING BEVERAGE CRATES FROM PLASTIC
PROCÉDÉ DE FABRICATION DE CAISSES DE BOISSONS EN MATIÈRE PLASTIQUE

(30) Priorität: 08.11.2011 DE 102011117827
(43) Veröffentlichungstag der Anmeldung: 31.07.2019
(62) Teilanmeldung aus: 12790415.9
(73) Patentinhaber: Störtebeker Braumanufaktur GmbH, 18439 Stralsund (DE)
(72) Erfinder: Nordmann, Jürgen, 18573 Rambin (DE); Triebe, Karsten, 18573 Rambin (DE)
(74) Vertreter: Hauck Patentanwaltspartnerschaft mbB

(56) Entgegenhaltungen:
- EP-A1- 1 008 527
- EP-A1- 2 143 647
- XP055246407

## Beschreibung

Die Erfindung bezieht sich auf ein Verfahren zum Herstellen von Getränkekisten aus Kunststoff.

Getränkekisten dienen dem Transport einer Vielzahl von Getränkeflaschen. Bekannt sind z.B. Getränkekisten für 20×0,5l-Bierflaschen oder für 24×0,33l-Bierflaschen. Früher wurden Getränkekisten aus Holz hergestellt. Heute bestehen Getränkekisten in der Regel aus Kunststoff. Getränkekisten werden meistens für Mehrwegflaschen eingesetzt. Der Verbraucher entrichtet beim Erwerb einer Getränkekiste Pfand für die Mehrwegflaschen und für die Getränkekisten.

Getränkekisten haben einen rechteckigen Boden und von den Rändern des Bodens hochstehende Seitenwände. Die Seitenwände können mehr oder weniger geschlossen sein. Sie sind mit Tragöffnungen zum Ergreifen und Tragen der Getränkekisten versehen. Die Seitenwände können auch rahmenartig ausgebildet sein, mit vertikal hochstehenden Pfosten und horizontalen Rahmenteilen. Zum Tragen können die horizontalen Rahmenteile gegriffen werden.

Vom Boden bekannter Getränkekisten stehen vertikale Trennwände hoch, die Gefache für das Einsetzen von Flaschen abgrenzen. Ferner sind Getränkekisten bekannt, bei denen vom Boden Pinolen hochstehen, um Flaschenstellplätze voneinander zu trennen. Des Weiteren gibt es Flaschenkisten, bei denen vom Boden Pinolen und Trennwände vorstehen. Ferner sind Flaschenkisten bekannt, die vom Boden hochstehende Pinolen und Halbpinolen aufweisen und Vorsprünge, die höchstens die Höhe von Stützschwellen erreichen. Flaschenkisten mit Pinolen sind insbesondere zum Einsetzen von Flaschen in Multipacks aus Karton geeignet, die mehrere Flaschen aufnehmen.

Zum Bilden standsicherer Stapel aus Flaschenkästen weisen diese meistens einen von der Unterseite vorstehenden Sockel auf, der in die Öffnung zwischen den Seitenwänden an der Oberseite einer weiteren Flaschenkiste einsetzbar ist, wobei sich die seitlich des Sockels vorstehenden Randbereiche des Bodens auf dem oberen Rand der unteren Flaschenkiste abstützen.

Flaschenkisten werden mit Aufdrucken versehen, die z.B. den Hersteller, die Marke bzw. andere Angaben betreffen.

Bereits bekannt ist, einen Aufdruck auf eine Getränkekiste mittels eines In-Mould-Labels aufzubringen. Hierbei handelt es sich um eine Folie, die mit der Marke bedruckt ist und in einer Ausnehmung mit glatter Oberfläche eines Spritzgießwerkzeugs mit dem Material der Getränkekiste hinterspritzt wird. Auf diese Weise wird eine qualitativ hochwertige Wiedergabe der Marke erreicht.

Die DE 20 2009 015 066 U1 beschreibt einen Flaschenkasten, der an einer Seitenwand eine Ausnehmung aufweist, in der ein Inmould-Label aufgenommen und fest mit der Seitenwand des Kastens verbunden ist. Die Folie ist an ihrer freiliegenden Außenseite vollflächig mit einer Überdruckschicht aus transparentem Kunststoff überzogen, wobei der Kunststoffüberzug die in den Kunststoff der Kastenseitenwand eingebettete Folie vollständig übergreift, um die Folie mit ihrer bedruckten oder mit einem Dekor versehenen Sichtfläche wirkungsvoll gegen Schädigungen zu schützen.

Die DE 10 2005 036 258 A1 beschreibt eine Dekorfolie und ein Verfahren zu ihrer Herstellung sowie einen Getränkekasten aus Kunststoff, der die Dekorfolie aufweist.

Die EP 2 143 647 A1 beschreibt einen Getränkekasten, bei dem auf einem Bereich der Seitenwand eine Inmould-Folie angeordnet ist, die ein Relief mit zumindest einer Erhöhung und/oder zumindest einer Vertiefung aufweist. Die Erhöhungen und Vertiefungen nehmen verschiedene diskrete Ebenen ein. Ferner weist das Relief abgerundete, eckige oder sonstige Geometrien auf. Durch das Relief soll der Herstellername, ein Symbol oder Informationen auf einer oder mehreren Seitenwänden der Getränkekiste gebildet werden.

Die EP 1 008 527 A1 beschreibt eine spritzgegossene Getränkekiste, die vier plattenförmige Seitenwände aufweist. Die Seitenwände haben jeweils einen nach außen gewölbten Bereich mit parallelen Oberflächen auf der Innen- und Außenseite und einen ovalen Umfangsrand. An den Umfangsrand schließt sich ein den nach außen gewölbten Bereich umgebender, ebener Bereich der Seitenwände an. Auf den nach außen gewölbten und den ebenen Bereichen sind bedruckte Etiketten angebracht. Die plattenförmigen Seitenwände haben überall eine gleichmäßige Wandstärke.

Aus Oberland M&V GmbH "Flaschenträger", 25. Juli 2007, XP 05526587, Deutsches Patent- und Markenamt, DPMA Register DES 40701968-0001 ist eine einfarbige Getränkekiste bekannt, die an den Außenseiten der Seitenwände eine Holzstruktur aufweist.

Ferner ist eine Getränkekiste aus Kunststoff bekannt, die die Optik einer Getränkekiste aus Holz aufweist. Die bekannte Getränkekiste hat einen durchbrochenen Rahmen aus horizontalen Brettern und vertikalen Pfosten, der die Oberflächenstruktur von Holz aufweist. Die Getränkekiste ist im Siebdruckverfahren bedruckt und weist das Erscheinungsbild von hellem, frischem Holz auf. Herstellungsbedingt ist die Qualität der Holzoptik der Getränkekiste nur mäßig.

Davon ausgehend liegt der Erfindung die Aufgabe zugrunde, ein Verfahren zum Herstellen von Getränkekisten aus Kunststoff zur Verfügung zu stellen, mit dem Getränkekisten mit verbesserter Qualität die Anmutung und Haptik von Getränkekisten aus einem anderen Material als Kunststoff verliehen werden kann.

Die Aufgabe wird durch ein Verfahren mit den Merkmalen des Anspruches 1 gelöst. Vorteilhafte Ausgestaltungen des Verfahrens sind in Unteransprüchen angegeben.

Bei dem erfindungsgemäßen Verfahren zum Herstellen von Getränkekisten aus Kunststoff mit der Anmutung einer Getränkekiste aus einem anderen Material als Kunststoff werden
- ein Spritzgießwerkzeug zum Spritzgießen der Getränkekiste bereitgestellt, das so beschaffen ist, dass es die Außenseiten der Seitenwände der Getränkekisten flächendeckend mit einer charakteristischen Oberflächenstruktur des Materials versieht, dessen Anmutung die Getränkekisten aufweisen sollen,
- in das Spritzgießwerkzeug Folien eingebracht, die ein fotorealistisches Bild des Materials mit derselben charakteristischen Oberflächenstruktur aufweisen, wobei die Folien mit dem Bild auf die Oberflächenstruktur der Getränkekiste ausgerichtet werden und
- in dem Spritzgießwerkzeug die Getränkekiste durch Hinterspritzen der Folien hergestellt, wobei die Oberflächenstrukturen passend zum Bild erzeugt und zugleich eine Verbindung des Materials eines Grundkörpers der Getränkekiste mit den Folien erreicht wird.

Bei diesem Verfahren wird die Getränkekiste durch Hinterspritzen von Folien mit dem Erscheinungsbild einer Getränkekiste aus einem bestimmten Material hergestellt. Grundsätzlich kommt dabei die Technik zum Einsatz, die auch beim "In-Mould-Labeling" zum Einsatz kommt. Wesentlich ist dabei, dass die in den Bildern auf den Folien sichtbaren Oberflächenstrukturen passgenau auf die entsprechenden Oberflächenstrukturen des Werkzeugs ausgerichtet werden. Beim Hinterspritzen der Folien werden die Oberflächenstrukturen passend zum Bild erzeugt und zugleich eine Verbindung des Materials des Grundkörpers der Getränkekiste mit den Folien erreicht.

Gemäß einer Ausgestaltung des erfindungsgemäßen Verfahrens wird in qualitativ besonders hochwertiger Weise erreicht, dass die Getränkekiste die Anmutung und Haptik einer Getränkekiste aus einem anderen Material als Kunststoff erhält. Hierfür werden nämlich die Getränkekisten nicht nur auf den Außenseiten der Seitenwände flächendeckend mit einer charakteristischen Oberflächenstruktur des Materials versehen, dessen Anmutung die Getränkekisten aufweisen sollen. Zusätzlich werden auf die strukturierten Außenseiten der Grundkörper flächendeckend Folien flächig aufliegend aufgebracht und mit diesen verbunden, die ein fotorealistisches Bild des Materials mit derselben Oberflächenstruktur aufweisen. Beim Aufbringen der Folien wird das fotorealistische Bild des Materials mit der Oberflächenstruktur passgenau auf die beim Spritzgießen erzeugte, entsprechende Oberflächenstruktur der Seitenwände ausgerichtet. Durch die Überlagerung der Oberflächenstruktur und des fotorealistischen Bildes derselben Oberflächenstruktur wird den Getränkekisten eine qualitativ sehr hochwertige bzw. täuschend echte Anmutung und Haptik einer Getränkekiste aus dem anderen Material als Kunststoff verliehen. Das erfindungsgemäße Verfahren bringt Getränkekisten hervor, bei denen die Außenseiten der Seitenwände dreidimensional entsprechend der Oberflächenstruktur des Materials gestaltet sind, dessen Anmutung die Getränkekiste aufweisen soll. In Kombination mit dem der Oberflächenstruktur überlagerten photorealistischen Bild derselben Oberflächenstruktur führt dies zu einem Erscheinungsbild der Getränkekiste, die dem Erscheinungsbild des originalen Materials täuschend ähnelt, dessen Anmutung die Getränkekiste aufweisen soll. Auch die Haptik der Getränkekiste ist gegenüber der Haptik herkömmlicher Getränkekisten mit glatten Außenseiten stark verbessert und kommt der Haptik einer Getränkekiste aus dem originalen Material sehr nahe. Mit dem erfindungsgemäßen Verfahren können insbesondere Getränkekisten aus Kunststoff hergestellt werden, die in täuschend echter Weise die Anmutung einer Getränkekiste aus Holz aufweisen.

Die charakteristische Oberflächenstruktur ist eine Oberflächenstruktur, an der man ein bestimmtes Material gut erkennen kann. Falls das Material verschiedene Oberflächenstrukturen haben kann, ist die charakteristische Oberflächenstruktur eine typische Oberflächenstruktur die es ermöglicht, das Material zu erkennen. Das fotorealistische Bild ist vorzugsweise eine Fotografie oder eine Computergrafik.

Das Aufbringen der Folie auf die Außenseite, so dass sie flächig auf der Oberflächenstruktur aufliegt, erfolgt gemäß einer Ausgestaltung durch Aufpressen. Gemäß einer weiteren Ausgestaltung erfolgt es unter Anlegen eines Vakuums. Das Verbinden der Folie mit der Außenseite erfolgt gemäß einer weiteren Ausgestaltung durch Verschweißen. Vorzugsweise werden die Folien thermisch mit den Außenseiten verschweißt. Alternativ werden sie angeklebt.

Gemäß einer Ausgestaltung des Verfahrens weisen die auf dem Grundkörper aufgebrachten Folien eine das Bild tragende Grundfolie und eine das Bild überdeckende Schutzfolie auf. Die Schutzfolie wird nach dem Bedrucken der Grundfolie aufgebracht. Sie verhindert, dass bei Benutzung die Qualität des Bildes beeinträchtigt wird. Sie sichert die hohe Qualität des äußeren Erscheinungsbildes der Getränkekiste.

Gemäß einer weiteren Ausgestaltung werden die Folien bzw. Grundfolien im Rotationstiefdruckverfahren bedruckt. Hierdurch wird eine sehr hohe Bildqualität erreicht.

Gemäß einer weiteren Ausgestaltung werden nach dem erfindungsgemäßen Verfahren Getränkekisten mit der Optik bzw. Haptik einer Holzkiste oder einer Metallkiste oder eine gemauerten Kiste oder eine Kiste aus Geflecht oder einer Kiste aus Textil hergestellt. Bevorzugt werden nach dem Verfahren Getränkekisten mit der Anmutung bzw. Haptik einer Getränkekiste aus einem natürlichen Material (z.B. Holz) hergestellt.

Gemäß einer weiteren Ausgestaltung sind die Außenseiten der Seitenwände vollflächig oder nahezu vollflächig mit der charakteristischen Oberflächenstruktur des Materials versehen, dessen Anmutung die Getränkekisten aufweisen sollen, und sind auf die Außenseiten der Seitenwände vollflächig oder nahezu vollflächig Folien mit dem photorealistischen Bild des Materials mit derselben charakteristischen Oberflächenstruktur aufgebracht. Unter nahezu vollflächig wird vorzugsweise mindestens 90%, weiterhin vorzugsweise mindestens 95% der Fläche der Seitenwände verstanden.

Gemäß einer weiteren Ausgestaltung wird auf mindestens einer Seitenwand auf die Außenseite einer Folie mindestens ein Etikett angebracht. Das Etikett ist beispielsweise ein Etikett aus Kunststoff und/oder aus Papier. Durch die Anbringung des Etiketts auf die Außenseite der Folie wird die dreidimensionale Gestaltung der Oberfläche und die Annäherung an eine Getränkekiste aus dem originalen Material weiter verbessert. Das Etikett wird beispielsweise durch Aufkleben und/oder durch Aufsiegeln auf der Außenseite der Folie angebracht.

Ferner bezieht die Erfindung Verfahren ein, bei denen die Innenseiten der Seitenwände der Grundkörper mit der charakteristischen Oberflächenstruktur des Materials versehen werden, dessen Anmutung die Getränkekisten aufweisen sollen, und bei denen auf die Innenseiten der Seitenwände Folien mit einem photorealistischen Bild des Materials mit derselben charakteristischen Oberflächenstruktur auf die Oberflächenstruktur der Getränkekisten ausgerichtet flächig aufliegend aufgebracht und mit den Innenseiten der Grundkörper verbunden werden. Bei dieser Ausgestaltung des Verfahrens haben die Getränkekisten an den Außenseiten und den Innenseiten die Anmutung und Haptik der Getränkekiste aus dem originalen Material. Diese Ausgestaltung ist besonders vorteilhaft für Getränkekisten, die innen kein Gefache haben, sondern nur von der Bodenwand hochstehende Pinolen und/oder Vorsprünge und/oder Trennwände und/oder Vertiefungen in der Bodenwand. Bei diesen Getränkekisten können die Innenseiten der Trennwände ohne Beeinträchtigung vollflächig oder nahezu vollflächig mit Folien bedeckt werden.

Die Erfindung wird nachfolgend anhand der anliegenden Zeichnungen eines Ausführungsbeispieles näher erläutert. In den Zeichnungen zeigen:
- Fig. 1: eine Getränkekiste in einer Perspektivansicht schräg von oben und von der Seite;
- Fig. 2: einen horizontalen Teilschnitt durch eine Seitenwand der Getränkekiste.

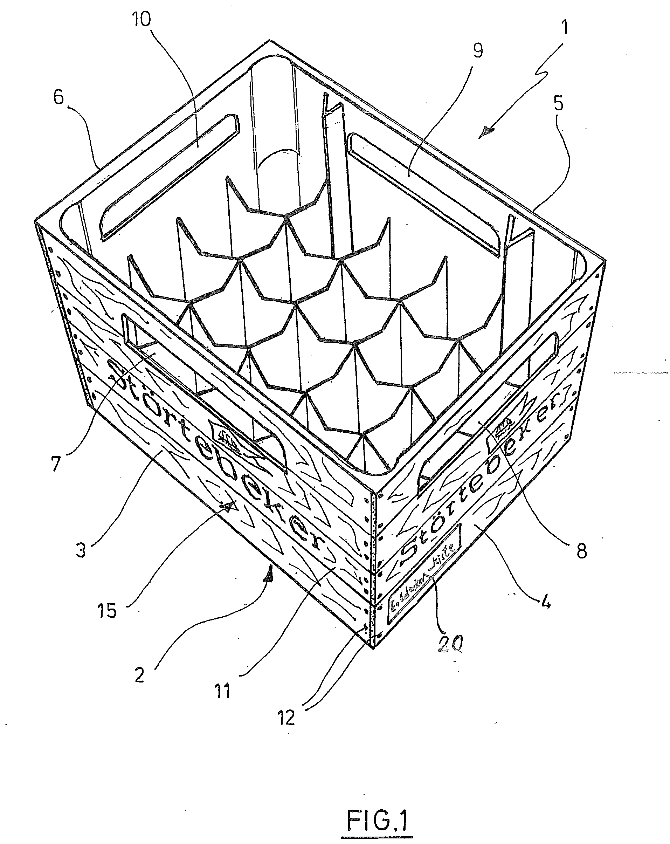

Gemäß Fig. 1 weist eine Getränkekiste 1 mindestens eine Bodenwand 2 und vier von den Rändern der Bodenwand 2 hochstehende Seitenwände 3, 4, 5, 6 auf. Unterhalb der oberen Ränder sind in den Seitenwänden 3, 4, 5, 6 Grifföffnungen 7, 8, 9, 10 vorhanden.

Die Seitenwände 3 bis 6 haben das Aussehen einer Wand aus Holzbrettern 11. In den Randbereichen weist die Oberflächenstruktur die Struktur von Nägeln 12 oder anderen Befestigungsmitteln wie Holzzapfen auf.

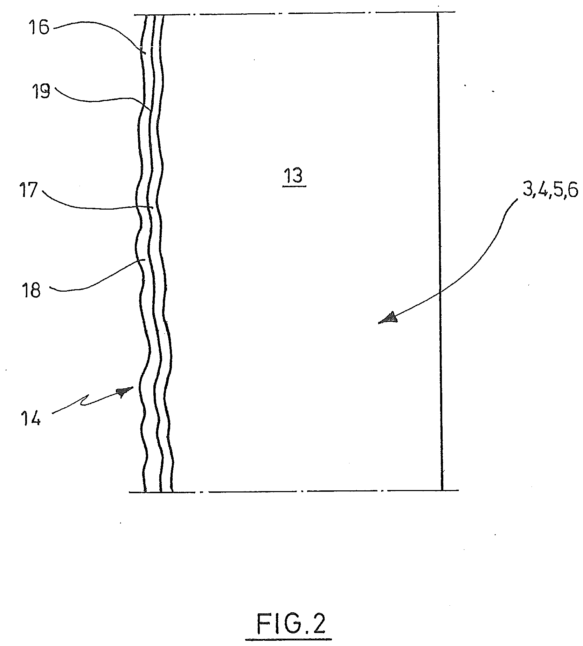

Gemäß Fig. 2 wird die Anmutung einer Holzkiste dadurch erreicht, dass ein Grundkörper 13 der Getränkekiste 1 auf der Außenseite 14 eine entsprechend der Holzbretterkonstruktion strukturierte Oberflächenstruktur 15 aufweist. Die Oberflächenstruktur 15 wird beim Spritzgießen des Grundkörpers 13 mittels geeignet geformter Spritzgießwerkzeuge erzeugt.

Des Weiteren werden auf den Außenseiten Folien 16 angebracht, die eine Grundfolie 17 und eine Schutzfolie 18 umfassen. Die von der Schutzfolie 18 überdeckte Seite der Grundfolie 17 trägt das Bild 19 der Holzbretterkonstruktion, deren Oberflächenstruktur 15 auf den Außenseiten des Grundkörpers 13 vorhanden ist. Die Folien sind mit dem Bild 19 passgenau auf die Oberflächenstruktur 15 ausgerichtet und durch Aufpressen und/oder unter Vakuum und durch Verschweißen flächig mit dem Grundkörper 13 verbunden.

Auf die Seitenwand 4 ist ein Etikett 20 mit Angaben zum Getränkeerzeugnis aufgeklebt oder aufgesiegelt.

Die Getränkekiste 1 hat somit das täuschende Erscheinungsbild und die Haptik einer Getränkekiste mit Seitenwänden aus Holzbrettern. Die Qualität der Fotografien wird durch die Schutzfolie 18 gesichert.

## Patentansprüche

1. Verfahren zum Herstellen von Getränkekisten aus Kunststoff mit der Anmutung einer Getränkekiste (1) einem anderen Material als Kunststoff, bei dem
• ein Spritzgießwerkzeug zum Spritzgießen der Getränkekiste (1) bereitgestellt wird, das so beschaffen ist, dass es die Außenseiten der Seitenwände (3 bis 6) der Getränkekisten flächendeckend mit einer charakteristischen Oberflächenstruktur des Materials versieht, dessen Anmutung die Getränkekisten (1) aufweisen sollen,
• in das Spritzgießwerkzeug Folien (16) eingebracht werden, die ein fotorealistisches Bild (19) des Materials mit derselben charakteristischen Oberflächenstruktur aufweisen, wobei die Folien (16) mit dem Bild (19) passgenau auf die entsprechenden Oberflächenstrukturen des Spritzgießwerkzeugs ausgerichtet werden und
• in dem Spritzgießwerkzeug die Getränkekiste (1) durch Hinterspritzen der Folien (16) hergestellt wird, wobei die Oberflächenstrukturen passend zum Bild (19) erzeugt und zugleich eine Verbindung des Materials eines Grundkörpers (13) der Getränkekiste (1) mit den Folien (16) erreicht wird.

2. Verfahren nach Anspruch 1, bei dem die Folien eine das Bild (19) tragende Grundfolie (17) und eine das Bild (19) überdeckende Schutzfolie (18) umfassen.

3. Verfahren nach Anspruch 1 oder 2, bei dem die Folien (16) im Rotationstiefdruckverfahren bedruckt werden.

4. Verfahren nach einem der Ansprüche 1 bis 3, bei dem die Seitenwände (3 bis 6) vollflächig mit der charakteristischen Oberflächenstruktur des Materials versehen sind, dessen Anmutung die Getränkekisten (1) aufweisen sollen, und bei dem die Folien (16) vollflächig auf den Außenseiten der Seitenwände (3 bis 6) verbunden werden.

5. Verfahren nach einem der Ansprüche 1 bis 4, bei dem an mindestens einer Seitenwand (3 bis 6) auf der Außenseite der Folie (16) mindestens ein Etikett (20) angebracht wird.

## Claims

1. A method for manufacturing beverage crates from plastic with the appearance of a beverage crate (1) of a different material than plastic, wherein:
• an injection mold is provided for injection molding the beverage crate (1) that is of such a kind that it provides the entire surface of the outer sides of the side walls (3 to 6) of the beverage crates with a characteristic surface structure of the material, the appearance of which the beverage crates (1) are supposed to have,
• films (16) are introduced into the injection mold that have a photo realistic picture (19) of the material with the same characteristic surface structure, wherein the films (16) with the picture (19) are oriented in a precise fit on the corresponding surface structures of the injection mold, and
• the beverage crate (1) is produced in the injection mold by back-molding the films (16), wherein the surface structures are generated to fit the picture (19), and a bonding of the material of a main body (13) of the beverage crate (1) to the films (16) is simultaneously achieved.

2. The method according to claim 1, wherein the films comprise a base film (17) bearing the image (19) and a protective film (18) covering the image (19).

3. The method according to claim 1 or 2, wherein the films (16) are printed in a rotogravure method.

4. The method according to one of claims 1 to 3, wherein the entire surface of the side walls (3 to 6), are provided with the characteristic surface structure of the material, the appearance of which the beverage crates (1) are supposed to have, and wherein the entire surface of the films (16) are bonded to the outer sides of the side walls (3 to 6).

5. The method according to one of claims 1 to 4, wherein on at least one side wall (3 to 6), at least one label (20) is affixed to the outside of the film (16).

## Revendications

1. Procédé de fabrication de caisses de boissons en matière plastique avec l'apparence d'une caisse de boissons (1) à base d'un autre matériau que la matière plastique, dans lequel
• un outil de moulage par injection pour mouler la caisse de boissons (1) par injection est mis en place, lequel est constitué de manière à revêtir les faces extérieures des parois latérales (3 à 6) des caisses de boissons d'une structure superficielle caractéristique du matériau sur toute leur surface, dont les caisses de boissons (1) doivent présenter l'apparence,
• des feuilles (16) sont introduites dans l'outil de moulage par injection, qui présentent une image photo-réaliste (19) du matériau avec la même structure superficielle caractéristique, sachant que les feuilles (16) avec l'image (19) sont alignées très exactement sur les structures superficielles correspondantes de l'outil de moulage par injection et
• la caisse de boissons (1) est fabriquée dans l'outil de moulage par injection moyennant le surmoulage *(ou surinjection)* des feuilles (16), sachant que les structures superficielles sont générées en étant ajustées à l'image (19) et qu'une liaison du matériau d'un corps de base (13) de la caisse de boissons (1) est réalisée en même temps avec les feuilles (16).

2. Procédé selon la revendication 1, dans lequel les feuilles comprennent une feuille de base (17) portant l'image (19) et une feuille de protection (18) recouvrant l'image (19).

3. Procédé selon la revendication 1 ou 2, dans lequel les feuilles (16) sont imprimées dans un procédé d'héliogravure *(ou rotogravure).*

4. Procédé selon l'une des revendications 1 à 3, dans lequel les parois latérales (3 à 6) sont revêtues de la structure superficielle caractéristique du matériau sur toute leur surface, dont les caisses de boissons (1) doivent présenter l'apparence, et dans lequel les feuilles (16) sont reliées aux faces extérieures des parois latérales (3 à 6) sur toute leur surface.

5. Procédé selon l'une des revendications 1 à 4, dans lequel au moins une étiquette (20) est appliquée à au moins une paroi latérale (3 à 6) sur la face extérieure de la feuille (16).
